Europäisches Patentamt

European Patent Office

Office européen des brevets

(11) Veröffentlichungsnummer: **0 201 783**
**B1**

(12) **EUROPÄISCHE PATENTSCHRIFT**

(45) Veröffentlichungstag der Patentschrift:
23.11.88

(51) Int. Cl.⁴: **D 21 G  1/02,** F 16 C  13/00

(21) Anmeldenummer: **86105740.4**

(22) Anmeldetag: **25.04.86**

(54) Walzenaggregat mit durchbiegungssteuerbarer und temperierbarer Walze.

(30) Priorität: **08.05.85  DE 3516535**

(43) Veröffentlichungstag der Anmeldung:
**20.11.86 Patentblatt 86/47**

(45) Bekanntmachung des Hinweises auf die Patenterteilung:
**23.11.88 Patentblatt 88/47**

(84) Benannte Vertragsstaaten:
**CH FR GB LI NL SE**

(56) Entgegenhaltungen:
**DE-A-2 503 051**
**DE-A-2 902 956**
**DE-A-3 325 385**
**GB-A-2 041 158**

(73) Patentinhaber: **Kleinewefers GmbH,**
**Kleinewefersstrasse 25, D-4150 Krefeld 1 (DE)**
Patentinhaber: **Ramisch Kleinewefers GmbH,**
**Neuer Weg 24- 40, D-4150 Krefeld (DE)**

(72) Erfinder: **Pav, Josef, Dr.- Ing., Eichhornstrasse 36c,**
**D-4150 Krefeld (DE)**
Erfinder: **Rauf, Richard, Crön 10, D-4150 Krefeld (DE)**
Erfinder: **Patermann, Hans- Dieter, Fadheider**
**Strasse 33, D-4156 Willich 2 (DE)**

(74) Vertreter: **Knoblauch, Ulrich, Dr.- Ing.,**
**Kühhornshofweg 10, D-6000 Frankfurt am Main 1**
**(DE)**

## Beschreibung

Die Erfindung bezieht sich auf ein Walzenaggregat mit durchbiegungssteuerbarer und temperierbarer Walze, deren Walzenmantel um einen festen Träger drehbar und auf diesem mittels lasttragender hydrostatischer Lagerelemente auf der einer Gegenwalze zugewandten Seite des Trägers abgestützt ist, die je durch mindestens einen mit Druckflüssigkeit versorgbaren Druckgeber belastbar sind, mindestens eine mit dem Druckraum des Druckgebers über eine Drosselstelle verbundene Lagertasche aufweisen und den Walzenmantel zumindest mit einer Kraftkomponente entgegen der Lastrichtung belasten, mit einer Druckeinstellvorrichtung, mit der der jedem Druckgeber zuzuordnende Druck einzeln oder gruppenweise einstellbar ist, mit einer Temperiervorrichtung, mit der der Druckflüssigkeit Warme zugeführt oder entzogen wird, und mit einer Wärmemengeneinstellvorrichtung, mit der die zwischen Druckflüssigkeit und Walzenmantel übertragene Wärmemenge beeinflußbar ist.

Bei einem bekannten Walzenaggregat dieser Art (DE-OS-2 420 324) wirkt eine durchbiegungssteuerbare und temperierbare Walze mit einer Gegenwalze zur Bildung eines Walzwerks zusammen, das insbesondere für das Gebiet der Papiermaschinen, also als Kalander, geeignet ist.

Die Lagerelemente sind in einer Reihe auf der der Gegenwalze zugewandten Seite des Trägers angeordnet. Die Drückräume der Druckgeber sind zonenweise an eine gemeinsame Zuleitung angeschlossen und werden über ein Ventil der Druckeinstellvorrichtung mit einem Druck versorgt, der zu der gewünschten Durchbiegungssteuerung führt. Die gesamte Druckflüssigkeit wird mittels eines Wärmetauschers beheizt. In jeder Zuleitung gibt es eine geregelte Zusatzheizung, welche die Temperatur der Druckflüssigkeit in dieser Zuleitung unterschiedlich festzulegen gestattet.

Aufgrund der Zusatzheizvorrichtungen ergibt sich ein unerwunschter Mehraufwand. Die auf den Walzenmantel übertragbare Wärmemenge ist begrenzt, weil Druckflüssigkeit nicht über einen bestimmten Temperaturwert, bei einem Syntheseöl beispielsweise 240° C, hinaus erwärmt werden kann und die den Druckgebern pro Zeiteinheit zuzuführende Druckflüssigkeitsmenge durch die Druckeinstellvorrichtung festgelegt ist.

Es ist auch schon bekannt (DE-PS-2 503 051), bei einer mit Walzenmantel und Lagerelementen versehenen Walze die Heizfunktion von der Stützfunktion für den Walzenmantel zu trennen. Zu diesem Zweck sind auf der den last tragenden Lagerelementen gegenüberliegenden Seite des Trägers mit Heizflüssigkeit versorgte Anpreßelemente vorgesehen, die einen ähnlichen Aufbau wie die Lagerelemente haben. Die Heizflüssigkeit kann das gleiche Mittel wie die Druckflüssigkeit sein, hat aber einen anderen Druck und eine andere Temperatur als die Druckflüssigkeit. Die Anpreßelemente haben einen etwas größeren Abstand voneinander als die Lagerelemente.

Es sind ferner durchbiegungssteuerbare Walzen bekannt (DE-PS-3 325 385), bei denen außer den lasttragenden primären Lagerelementen in Umfangsrichtung versetzte sekundäre Lagerelemente vorgesehen sind. Die primären Lagerelemente belasten den Walzenmantel zumindest mit einer Kraftkomponente entgegen der Lastrichtung, die sekundären Lagerelemente dagegen in der Lastrichtung. Wenn die primären und sekundären Lagerelemente jeweils mit zwei in Umfangsrichtung versetzten Druckgebern versehen sind, belasten sie den Walzenmantel auch mit einer Kraftkomponente quer zur Lastebene. Dies führt zu einer Stabilisierung des Walzenmantels gegenüber äußeren Querkräften.

Der Erfindung liegt die Aufgabe zugrunde, ein Walzenaggregat der eingangs beschriebenen Art anzugeben, bei dem eine von der Durchbiegungssteuerung unabhängige Änderung der zwischen Druckflüssigkeit und Walzenmantel übertragenen Wärmemenge auch ohne eine Temperaturänderung der Druckflüssigkeit möglich ist.

Diese Aufgabe wird erfindungsgemäß dadurch gelöst, daß außer den lasttragenden primären Lagerelementen in an sich bekannter Weise in Umfangsrichtung um einen bestimmten Winkel versetzte sekundäre Lagerelemente vorgesehen sind, die den Walzenmantel zumindest mit einer Kraftkomponente in Lastrichtung belasten, daß die Wärmemengeneinstellvorrichtung durch die Druckeinstellvorrichtung gebildet ist und durch Druckänderung den Volumenstrom der Druckflüssigkeit beeinflußt und daß der Druckeinstellvorrichtung ein Kompensator zugeordnet ist, der diese Druckänderungen derart auf die primären und sekundären Lagerelemente verteilt, daß die Änderungen der Belastung des Walzenmantels in und entgegen der Lastrichtung etwa gleich sind.

Bei einem solchen Aufbau wird zur Veränderung der zwischen Druckflüssigkeit und Walzenmantel zu übertragenden Wärmemenge der Volumenstrom der Druckflüssigkeit geändert. Dies geschieht mit der ohnehin vorhandenden Druckeinstellvorrichtung. Zusätzliche Temperiervorrichtungen, um der Druckflüssigkeit uhterschiedliche Temperaturen zu geben, können entfallen oder zumindest reduziert werden. Der Kompensator sorgt in Verbindung mit den sekundären Lagerelementen dafür, daß die Durchbiegungssteuerung unbeeinflußt bleibt. Da der Walzenmantel an mindestens zwei Stellen seines Umfangs mit temperierter Druckflüssigkeit in Berührung kommt, steht eine verhältnismäßig große Druckflüssigkeitsmenge für den Wärmetausch zur Verfügung. Bei einer beheizbaren Walze ist es unter sonst gleichen Umständen möglich, mit einer Druckflüssigkeit verhältnismäßig geringer Temperatur zu arbeiten.

Umgekehrt kann man die Druckflüssigkeit, da eine Zusatzbeheizung entfällt, bis an den oberen zulässigen Temperaturgrenzwert erwärmen, so daß große Wärmemengen auf den Walzenmantel übertragen werden können.

Besonders günstig ist es, daß die primären und die sekundären Lagerelemente jeweils mit mindestens zwei in Umfangsrichtung versetzten Druckgebern versehen sind, so daß sie den Walzenmantel auch mit einer Kraftkomponente quer zur Lastebene belasten, und daß der Kompensator die zur Änderung des Volumenstroms erforderlichen Druckänderungen derart auf die Druckgeber der primären und sekundären Lagerelemente verteilt, daß die Änderungen der Belastung des Walzenmantels quer zur Belastungsebene in beiden Richtungen etwa gleich sind. Durch die Verwendung von mindestens zwei in Umfangsrichtung versetzten Druckgebern erhölt sich die Lagerfläche und damit derjenige Bereich des Walzenmantels, der mit der temperierten Druckflüssigkeit in Berührung kommt. Die sekundären Lagerelemente können eine normale Lagerfunktion ausüben und damit den Walzenmantel stabilisieren. Mit Hilfe des Kompensators wird dafür gesorgt, daß die Stabilisierungswirkung der Querkraftkomponenten nicht beeinträchtigt wird.

Zweckmäßigerweise sind die sekundären Lagerelemente jeweils in der gleichen Walzenquerschnittsebene angeordnet wie die primären Lagerelemente. Es ergeben sich dann eindeutige Zuordnungen bei der Kompensation der Druckänderungen für die primären und sekundären Lagerelemente.

Besonders günstig ist es, wenn jeweils ein primäres und ein sekundäres Lagerelement einander diametral gegenüberliegen und je zwei symmetrisch zur Lastebene angeordnete Druckgeber aufweisen. Diese doppelt symmetrisch angeordneten Lagerelemente verknüpfen ein Höchstmaß an Stabilisierung mit einer großflächigen Wärmemengenübertragung und einer vergleichsweise einfachen Kompensation bei der Verteilung der temperierungsbedingten Druckänderungen in der Lastebene und quer dazu.

Alle sekundären Lagerelemente können an dieselbe Druckzuleitung angeschlossen sein. In diesem Fall ist jeweils das Temperaturniveau des gesamten Walzenmantels änderbar.

Es besteht aber auch die Möglichkeit, die sekundären Lagerelemente in Zonen zusammenzufassen und die Lagerelemente jeder Zone jeweils an eine gemeinsame Druckzuleitung anzuschließen. Dies ermöglicht es, zonenweise eine unterschiedliche Temperierung des Walzenmantels vorzunehmen. Insbesondere können Zonen primärer und sekundärer Lagerelemente miteinander korrespondieren. Daneben sind aber auch beliebige andere Kombinationen von einzeln oder gruppenweise mit Druckflüssigkeit versorgten primären und sekundären Lagerelementen möglich.

Mit besonderem Vorzug ist der Drosselwiderstand der Drosselstellen der sekundären Lagerelemente kleiner als derjenige der primären Lagerelemente. Das bedeutet, daß unter sonst gleichen Umständen ein größerer Volumenstrom der Druckflüssigkeit durch die sekundären Lagerelemente fließt. Damit wird dafür gesorgt, daß eine ausreichende Druckflüssigkeitsmenge durch die sekundären Lagerelemente fließt, obwohl der diesen Lagerelementen zuzuführende Druck in der Regel erheblich geringer sein muß als der den lasttragenden primären Lagerelementen zuzuführende Druck.

Insbesondere kann dafür gesorgt sein, daß die Drosselstellen in den sekundären Lagerelementen so bemessen sind, daß im Betrieb der diesen Lagerelementen zugeordnete Volumenstrom mindestens das 1,5-fache, vorzugsweise mehr als das Doppelte, des den primären Lagerelementen zugeordneten Volumenstroms ist. Auf diese Weise können außerordentlich große Wärmemengen übertragen werden. Daß hierbei der Spalt zwischen der Lagerfläche der sekundären Lagerelemente und dem Walzenmantel geringfügig vergrößert wird, ist unerheblich, da über die sekundären Lagerelemente nur vergleichsweise geringe Kräfte geleitet werden. Außerdem genügen kleine prozentuale Änderungen des Volumenstroms bei den sekundären Lagerelementen, um eine gewünschte Änderung der Temperierung des Walzenmantels vorzunehmen, und daher auch entsprechend geringe Druckänderungen im Bereich der primären Lagerelemente.

Günstig ist es, wenn die als Drosselkanäle ausgebildeten Drosselstellen bei den sekundären Lagerelementen einen größeren Querschnitt haben als diejenigen der primären Lagerelemente. Der Volumenstrom ändert sich nämlich unter sonst gleichen Umständen mit der vierten Potenz des Kanaldurchmessers, so daß auf diese Weise große Unterschiede des Drosselwiderstandes erzielt werden können.

In weiterer Ausgestaltung der Erfindung ist eine Walzentemperatur-Regelvorrichtung vorgesehen, welche einen Istwertgeber, der die Temperatur über die Walzenbreite feststellt, einen Sollwertgeber, der ein Temperaturprofil über die Walzenbreite vorgibt, den Kompensator und die Druckeinstellvorrichtung aufweist. Auf diese Weise kann die Walzentemperatur auf das gewünschte Temperaturprofil eingestellt werden. Dieses Temperaturprofil kann aufgrund von Versuchen vorgegeben sein oder jeweils aufgrund betrieblicher Daten ermittelt werden Bei einer durch das Walzenaggret behandelten Bahn können diese betrieblichen Daten beispielsweise von der Glätte, dem Glanz, der Dicke u.dgl. der Bahn abgeleitet werden.

Wenn das Walzenaggregat eine die Druckeinstellvorrichtung beeinflussende Druckregelvorrichtung aufweist, empfiehlt es sich, daß die Druckregelvorrichtung zur Bestimmung des jedem Druckgeber zuzuordnenden Druckes einen Rechner aufweist, der auch den Kompensator bildet. Bei der jeweiligen Berechnung des den Druckgebern zuzuführenden Druckes kann gleichzeitig die entsprechende Verteilung der Druckänderungen berücksichtigt werden.

Des weiteren empfiehlt es sich, bei Verwendung einer die Druckeinstellvorrichtung versorgenden Druckflüssigkeitspumpe, daß dem den primären Lagerelementen zugeordneten Teil der Druckeinstellvorrichtung eine Druckerhöhungspumpe vorgeschaltet ist. Auf diese Weise wird der Tatsache Rechnung getragen, daß die primären Lagerelemente in der Regel mit einem höheren Druck versorgt werden als die sekundären Lagerelemente.

Die Erfindung wird nachstehend anhand in der Zeichnung dargestellter, bevorzugter Ausführungsbeispiele näher erläutert, Es zeigen:

Fig. 1 eine schematische Darstellung eines erfindungsgemäßen Walzenaggregats mit zugehöriger Druckflüssigkeitsversorgung,

Fig. 2 einen Querschnitt durch die Walze der Fig. 1,

Fig. 3 ein Kraftdiagramm für die in der Lastebene liegenden Lagerkräfte,

Fig. 4 ein Kraftdiagramm für die Querkräfte,

Fig. 5 in schematischer Darstellung den Druckverlauf in einem Lagerelement und

Fig. 6 eine abgewandelte Ausführungsform in ähnlicher Darstellung wie Fig. 1.

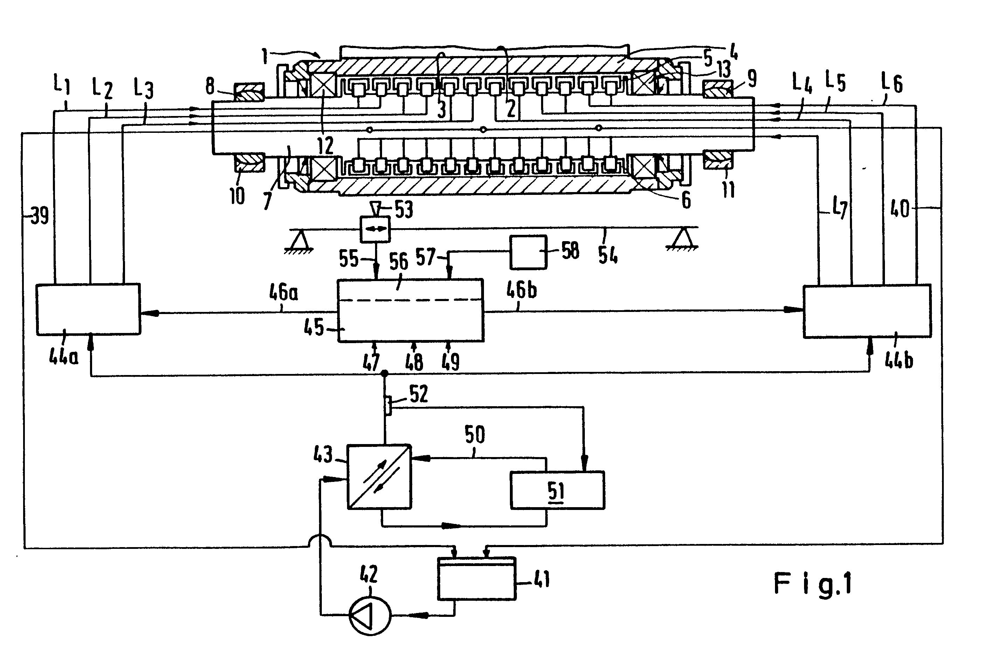

Gemäß Fig. 1 wirkt eine durchbiegungssteuerbare und temperierbare Walze 1 mit einer Gegenwalze 2 zusammen. In dem zwischen diesen Walzen gebildeten Spalt 3 kann beispielsweise Bannenmaterial aus Papier, Fasermaterial, Kunststoff o.dgl. behandelt werden. Die Walze 1 weit einen Walzenmantel 4 auf, der mit Hilfe einer ersten Reihe von primären Lagerelementen 5 und einer um 180° versetzt angeordneten zweiten Reihe von sekundären Lagerelementen 6 auf einem drehfest gehaltenen Träger 7 abgestützt ist. Die Enden des Trägers sind in Gelenklagern 8 bzw. 9 in seitlichen Ständern 10 bzw. 11 gehalten. Der Walzenmantel 4 ist mit seinen Enden auf Wälzlagern 12 bzw. 13 auf dem Träger abgestützt. Die Walzenenden können aber auch in bekannter Weise radial verschiebbar angeordnet sein.

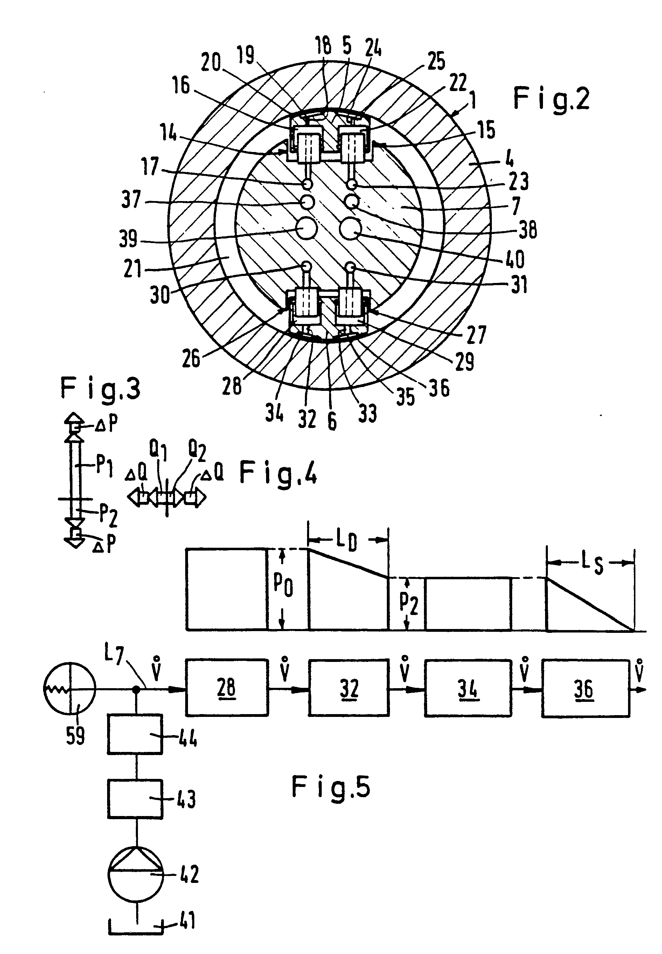

Wie Fig. 2 deutlicher zeigt, ist jedes Lagerelement 5 mit zwei in Umfangsrichtung versetzten Druckgebern 14 und 15 versehen. Der Druckgeber 14 weist einen Druckraum 16 auf, der über einen Kanal 17 mit Druckflüssigkeit versorgt wird und über einen Drosselkanal 18 mit einer Lagertasche 19 verbunden ist. Diese steht über einen zwischen der Lagerfläche des Lagerelements 5 und der Innenfläche des Walzenmantels 4 gebildeten Spalt 20 mit dem Innenraum 21 des Walzenmantels 4 in Verbindung. In ähnlicher Weise besitzt der Druckgeber 15 einen Druckraum 22, der über einen Kanal 23 mit Druckflüssigkeit versorgt wird und über einen Drosselkanal 24 mit einer Lagertasche 25 in Verbindung steht. Die sekundären Lagerelemente 6 haben einen ähnlichen Aufbau mit zwei in Umfangsrichtung versetzten Druckgebern 26 und 27, zugehörigen Druckräumen 28 und 29 mit Zuleitungen 30 und 31 sowie Drosselkanälen 32 und 33, Lagertaschen 34 und 35 sowie einem Spalt 36. Weitere Zuleitungen 37 und 38 führen zu anderen Zonen der Lagerelemente. Rückleitungen 39, 40 stehen mit dem Innenraum 21 in Verbindung, um die hydraulische Druckflüssigkeit in einen Behälter 41 (Fig. 1) zurückzutransportieren.

Eine Druckflüssigkeitspumpe 42 entnimmt hydraulische Flüssigkeit aus dem Behälter 41 und fördert sie über einen Wärmetauscher 43 zu einer aus zwei Teilen bestehenden Druckeinstellvorrichtung 44a und 44b. Diese Druckeinstellvorrichtung besitzt eine Vielzahl von Ausgängen, die je über eine Zuleitung L1 bis L7 mit einer Gruppe von Lagerelementen verbunden ist. Wie Fig. 1 zeigt, gehen die Zuleitungen L1 bis L6 jeweils zu zwei benachbarten primären Lagerelementen 5, während die Zuleitung L7 sämtlichen sekundären Lagerelementen 6 gemeinsam ist. Diese Zuleitungen setzen sich daher in den Zuleitungen im Innern des Trägers 4, wie die Zuleitungen 17, 23, 30, 31, 37 und 38 in Fig 2, fort. Die Druckeinstellvorringtung 44a, 44b vermag in jeder der Zuleitungen L1 bis L7 einen bestimmten Druck der Druckflüssigkeit aufrechtzuerhalten. Die Ansteuerung erfolgt mit Hilfe eines Rechners 45, der den Teil einer Druckregelvorrichtung bildet und über seine Ausgänge 46a und 46b entsprechende Signale an die Druckeinstellvorrichtung abgibt. Dem Rechner 45 können beispielsweise am Eingang 47 Druck-Istwerte am Eingang 48 Druck-Sollwerte und am Eingang 49 Istwerte der Bahnbeschaffenheit zugeführt werden, aus denen ein gewünschter Druck-Sollwert für jeden Walzenabschnitt berechnet wird.

Der Wärmetauscher 43 ist an einen Heizkreislauf 50 angeschlossen, dessen Wärmeträger in einer Heizvorrichtung 51 beheizt wird. Ein Temperaturfühler 52 meldet die Temperatur der Druckflüssigkeit. Diese Ist-Temperatur wird in einem nicht veranschaulichten Regler für die Heizvorrichtung 51 mit einer Temperatur-Führungsgröße verglichen, so daß die Temperatur auf einem wählbaren Wert gehalten wird.

Ein Temperaturfühler 53 mißt die Oberflächentemperatur des Walzenmantels 4. Dieser Fühler ist auf einer Bahn 54 über die Walzenbreite verschiebbar. Er gibt das Temperatur-Istsignal an einen Eingang 55 eines Kompensators 56, dessen zweiter Eingang 57 von einem Sollwertgeber 58 mit einem Soll-Temperaturprofil versorgt wird. Stattdessen können auch mehrere Temperaturfühler 53 fest nebeneinander längs der Walze angeordnet sein.

Der vom Rechner 45 mit gebildete Kompensator 56 berechnet aus der Regelabweichung zwischen dem jeweils gemessenen Temperatur-Istwert und dem für diesen Walzenabschnitt vorgesehenen Temperatur-Sollwert eine Druckänderung aus, die erforderlich ist, um den Volumenstrom der beheizten Druckflüssigkeit so zu ändern, daß sich die gewünschte Mehr- oder Minderübertragung der Wärmemenge in den Spalten zwischen Lagerelement und Walzenmantel dieses Walzenabschnitts ergibt. Gleichzeitig sorgt der Kompensator 56 dafür, daß die Druckänderungen derart auf die primären Lagerelemente 5 und die sekundären Lagerelemente 6 bzw. auf deren Druckgeber 14, 15 und 26, 27 verteilt werden, daß sich an der Durchbiegungssteuerung nichts ändert.

Dies ist in Fig. 3 und 4 veranschaulicht. Fig. 3 zeigt eine Kraft P1, die ein primäres Lagerelement 5 in der Lastebene entgegen der Last auf den Walzenmantel 4 ausübt, während eine in Lastrichtung wirkende Kraft P2 vom sekundären Lagerelement 6 auf den Walzenmantel ausgeübt wird. Bei der aus Gründen der Temperierung erstrebten Druckänderung zum Zweck der Volumenstromänderung sorgt der Kompensator dafür, daß sich die beiden Kräfte P1 und P2 jeweils um den gleichen Betrag $\Delta P$ verändern. Die resultierende Kraft auf den Walzenmantel bleibt daher gleich. Genauso ist es mit den Querkräften, welche beide Lagerelemente 5 und 6 auf den Walzenmantel 4 ausüben. Es gibt eine Querkraft Q1, die nach links wirkt, und eine Querkraft Q2, die nach rechts wirkt. Nach der Druckänderung sind beide Querkräfte um den gleichen Betrag $\Delta Q$ erhöht, so daß wiederum die resultierende Kraft gleich bleibt, hier also gleich Null ist.

Fig. 5 ist für ein sekundäres Lagerelement 6 veranschaulicht, welche Druckverhältnisse bei einem Volumenstrom V auftreten. Zusätzlich zu Fig. 1 ist noch ein Druckspeicher 59 an jede der Zuleitungen angeschlossen. Die Druckeinstellvorrichtung 44 sorgt dafür, daß im Druckraum 28 ein Druck $p_0$ herrscht, der in Verbindung mit der wirksamen Fläche des Druckgebers eine vorgegebene Anpreßkraft erzeugt. Dieser Druck $p_0$ sinkt wegen des Druckabfalls im Drosselkanal 32 auf den Wert $p_2$, der in Verbindung mit der Fläche der Lagertasche einen Stützdruck P2 ergibt, wie er in Fig. 3 angegeben ist. Ein weiterer Druckabbau bis auf den Behälterdruck erfolgt im Spalt 36. Sämtliche Drosselkanäle im primären und sekundären Lagerelement haben eine Länge $L_D$. Der Durchmesser d ist jedoch beim sekundären Lagerelement 6 größer als beim primären Lagerelement 5. Die Länge $L_S$ des Spalts 36 ist genauso groß wie die Länge des Spalts 20 beim primären Lagerelement, Die Spaltweite stellt sich automatisch in Abhängigkeit von den Druckverhältnissen ein.

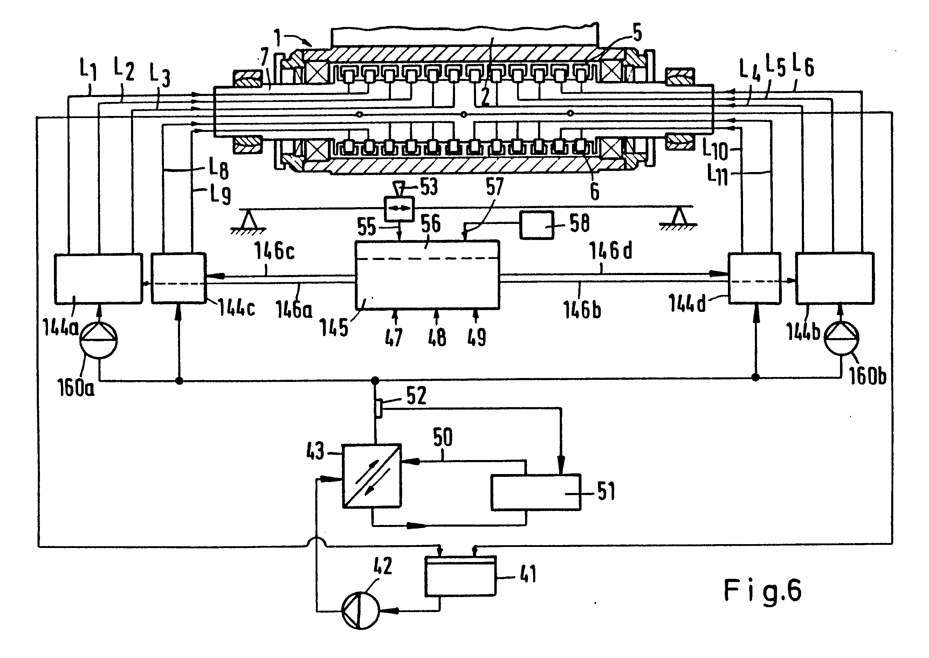

Bei der Ausführungsform nach Fig. 6 werden für diejenigen Teile, die gegenüber Fig. 1 unverändert sind, die gleichen Bezugszeichen verwendet, bei entsprechenden Teilen um 100 erhöhte Bezugzeichen. Unterschiedlich ist im wesentlichen, daß die Druckeinstellvorrichtung 144 in vier Teile 144a, 144b, 144c und 144d unterteilt ist. Die Teile 144a und 144b sind den primären Lagerelementen 5 zugeordnet und versorgen die Zuleitungen L1 bis L6 für sechs Zonen. Diesen Teilen ist eine Druckerhöhungspumpe 160a bzw. 160b vorgeschaltet. Die Teile 144b und 144d sind den sekundären Lagerelementen zugeordnet und versorgen die Zuleitungen L8 bis L11 für vier Zonen. Jedem dieser Teile ist ein Ausgang 146a bis 146d des Rechners 145 zugeordnet. Diese Ausgänge versorgen jeweils mehrere Einstelleelemente innerhalb der Druckeinstellvorrichtung.

**Patentansprüche**

1. Walzenaggregat mit durchbiegungssteuerbarer und temperierbarer Walze (1), deren Walzenmantel (4) um einen festen Träger (7) drehbar und auf diesem mittels lasttragender hydrostatischer Lagerelemente auf der einer Gegenwalze zugewandten Seite des Trägers abgestützt ist, die je durch mindestens einen mit Druckflüssigkeit versorgbaren Druckgeber (14, 15) belastbar sind, mindestens eine mit dem Druckraum (16, 22) des Druckebers (14, 15) über eine Drosselstelle (18, 24) verbundene Lagertasche (19, 25) aufweisen und den Walzenmantel (4) zumindest mit einer Kraftkomponente entgegen der Lastrichtung belasten, mit einer Druckeinstellvorrichtung, mit der der jedem Druckgeber (14, 15) zuzuordnende Druck einzeln oder gruppenweise einstellbar ist, mit einer Temperiervorrichtung (53, 55, 56, 57, 58), mit der der Druckflüssigkeit Wärme zugeführt oder entzogen wird, und mit einer Wärmemengeneinstellvorrichtung, mit der die zwischen Druckflüssigkeit und Walzenmantel (4) übertragene Wärmemenge beeinflußbar ist, dadurch gekennzeichnet, daß außer den lasttragenden primären Lagerelementen (5) in an sich bekannter Weise in Umfangsrichtung um einen bestimmten Winkel versetzte sekundäre Lagerelemente (6) vorgesehen sind, die den Walzenmantel (4) zumindest mit einer Kraftkomponente in Lastrichtung belasten, daß die Wärmemengeneinstellvorrichtung durch die Druckeinstellvorrichtung (44a-b; 144a-d) gebildet ist und durch Druckänderungen den Volumenstrom der Druckflüssigkeit beeinflußt und daß der Druckeinstellvorrichtung ein Kompensator (56) zugeordnet ist, der diese Druckänderungen derart auf die primären und sekundären Lagerelemente verteilt, daß die Änderungen der Belastung des Walzenmantels in, und entgegen der Lastrichtung etwa gleich sind.

2. Walzenaggregat nach Anspruch 1, dadurch gekennzeichnet, daß die primären und die sekundären Lagerelemente (5, 6) jeweils mit mindestens zwei in Umfangsrichtung versetzten Druckgebern (14, 15; 26, 27) versehen sind, so daß sie den Walzenmantel (4) auch mit einer Kraftkomponente quer zur Lastebene belasten, und daß der Kompensator (56) die zur Änderung des Volumenstroms erforderlichen Druckänderungen derart auf die Druckgeber der primären und sekundären Lagerelemente verteilt, daß die Änderungen der Belastung, des Walzenmantels quer zur Belastungsebene in beiden Richtungen etwa gleich sind.

3. Walzenaggregat nach Anspruch 1 oder 2, dadurch gekennzeichnet, daß die sekundären Lagerelemente (6) jeweils in der gleichen Walzenquerschnittsebene angeordnet sind wie die primären Lagerelemente (5).

4. Walzenaggregat nach Anspruch 2 und 3, dadurch gekennzeichnet, daß jeweils ein primäres und ein sekundäres Lagerelement (5, 6) einander diametral gegenüberliegen und diese Lagerelemente je zwei symmetrisch zur Lastebene angeordnete Druckgeber (14, 15; 26, 27) aufweisen.

5. Walzenaggregat nach einem der Ansprüche 1 bis 4, dadurch gekennzeichnet, daß alle sekundären Lagerelemente (6) an dieselbe Druckzuleitung (L7) angeschlossen sind.

6. Walzenaggregat nach einem der Ansprüche 1 bis 5, dadurch gekennzeichnet, daß die sekundären Lagerelemente (6) in Zonen zusammengefaßt sind und die Lagerelemente jeder Zone jeweils an eine gemeinsame Druckleitung (L8 - L11) angeschlossen sind.

7. Walzenaggregat nach einem der Ansprüche 1 bis 6, dadurch gekennzeichnet, daß der Drosselwiderstand der Drosselstellen (32, 33) der sekundären Lagerelemente (6) kleiner ist als derjenige der primären Lagerelemente (5).

8. Walzenaggregat nach Anspruch 7, dadurch gekennzeichnet, daß die Drosselstellen (32, 33) in den sekundären Lagerelementen (6) so bemessen sind, daß im Betrieb der diesen Lagerelementen zugeordnete Volumenstrom mindestens das 1,5 fache, vorzugsweise mehr als das Doppelte, des den primären Lagerelementen (5) zugeordneten Volumenstroms ist.

9. Walzenaggregat nach Anspruch 7 oder 8, dadurch gekennzeichnet, daß die als Drosselkanäle (32, 33) ausgebildeten Drosselstellen bei den sekundären Lagerelementen (6) einen größeren Querschnitt haben als diejenigen der primären Lagerelemente (5).

10. Walzenaggregat nach einem der Ansprüche 1 bis 9, gekennzeichnet durch eine Walzentemperatur-Regelvorrichtung, welche einen Istwertgeber (53), der die Temperatur über die Walzenbreite feststellt, einen Sollwertgeber (58), der ein Temperaturprofil über die Walzenbreite vorgibt, den Komponsator (56) und die Druckeinstellvorrichtung (44a-b; 144a-d) aufweist.

11. Walzenaggregat mit einer die Druckeinstellvorrichtung beeinflussenden Druckregelvorrichtung nach Anspruch 10, dadurch gekennzeichnet, daß die Druckregelvorrichtung zur Bestimmung des jedem Druckgeber (14, 15; 26, 27) zuzuordnenden Druckes einen Rechner (45; 145) aufweist, der auch den Kompensator (56) bildet.

12. Walzenaggregat mit einer die Druckeinstellvorrichtung versorgenden Druckflüssigkeitspumpe, nach einem der Ansprüche 1 bis 11, dadurch gekennzeichnet, daß dem den primären Lagerelementen (5) zugeordneten Teil (144a, b) der Druckeinstellvorrichtung eine Druckeröhungspumpe (160a, b) vorgeschaltet ist.

**Claims**

Roll assembly having a deflaction-controllable and temperature-controllable roll (1), the roll shell (4) of which is rotatable about a fixed support (7) and is supported on the latter by means of load-bearing hydrostatic bearing elements, on the side of the support facing a counter-roll, which bearing elements can each be loaded by at least one pressure transducer (14, 15), suppliable with pressure fluid, have at least one bearing relief (19, 25) connected to the pressure space (16, 22) of the pressure transducer (14, 15) via a restrictor (18, 24) and load the roll shell (4) at least with a force component opposing the load direction, having a pressure setting device, by which the pressure assigned to each pressure transducer (14, 15) can be set individually or in groups, having a temperature control device (53, 55, 56, 57, 58), by which heat is supplied to or removed from the pressure fluid, and having a quantity of heat setting device, by which the quantity of heat transferred between pressure fluid and roll shell (4) can be influenced, characterized in that, apart from the load-bearing primary bearing elements (5), secondary bearing elements (6) are provided, which are offset by a certain angle in a way known per se in circumferential direction and load the roll shell (4) at least with a force component in load direction, in that the quantity of heat setting device is formed by the pressure setting device (44a-b; 144a-d) and influences the volume flow of the pressure fluid by pressure changes, and in that the pressure setting device is assigned a compensator (56), which distributes these pressure changes over the primary and secondary bearing elements in such a way that the changes in the loading of the roll shell in and opposing the load direction are approximately the same.

2. Roll assembly according to Claim 1, characterized in that the primary and secondary bearing elements (5, 6) are in each case provided with at least two pressure transducers (14, 15; 26, 27) offset in circumferential direction, so that they load the roll shell (4) also with a force component transverse to the load plane, and in that the compensator (56) distributes the pressure changes necessary for changing the volume flow over the pressure transducers of the primary and secondary bearing elements in such a way that the changes in the loading of the roll shell transverse to the loading plane are approximately the same in both directions.

3. Roll assembly according to Claim 1 or 2, characterized in that the secondary bearing elements (6) are in each case arranged in the same cross-sectional plane of the roll as the primary bearing elements (5).

4. Roll assembly according to Claims 2 and 3, characterized in that a primary and a secondary bearing element (5, 6) are in each case diametrically opposite each other and these bearing elements each have two pressure transducers (14, 15; 26, 27) symmetrical to the load plane.

5. Roll assembly according to one of Claims 1 to 4, characterized in that all secondary bearing elements (6) are connected to the same pressure supply line (L7).

6. Roll assembly according to one of Claims 1 to 5, characterized in that the secondary bearing elements (6) are combined in zones and the bearing elements of each zone are connected to a common pressure line (L8 - L11) in each case.

7. Roll assembly according to one of Claims 1 to 6, characterized in that the restricting resistance of the restrictors (32, 33) of the secondary bearing elements (6) is smaller than that of the primary bearing elements (5).

8. Roll assembly according to Claim 7, characterized in that the restrictors (32, 33) in the secondary bearing elements (6) are dimensioned in such a way that, during operation, the volume flow assigned to these bearing elements is at least 1.5 times, preferably more than twice, the volume flow assigned to the primary bearing elements (5).

9. Roll assembly according to Claim 7 or 8, characterized in that the restrictors, designed as restricting channels (32, 33), have a greater cross section in the case of the secondary bearing elements (6) than those of the primary bearing elements (5).

10. Roll assembly according to one of Claims 1 to 9, characterized by a roll temperature control device, which has an actual-value sensor (53), which determines the temperature over the roll width, a setpoint generator (58), which specifies a temperature profile over the roll width, the compensator (56) and the pressure setting device (44a-b; 144a-d).

11. Roll assembly with a pressure control device, influencing the pressure setting device, according to Claim 10, characterized in that the pressure control device has a computer (45; 145) for determining the pressure to be assigned to each pressure transducer (14, 15; 26, 27) and also forming the compensator (56).

12. Roll assembly with a pressure fluid pump, supplying the pressure setting device, according to one of Claims 1 to 11, characterized in that the part (144a, b) of the pressure setting device assigned to the primary bearing elements (5) has a booster pump (160a, b) connected upstream of it.

## Revendications

1. Système de rouleau (1) à compensation de la flèche et réglage de la température, le bandage de rouleau (4) pouvant tourner sur un support fixe (7) et s'appuyant ssur celui-ci au moyen d'éléments d'appui hydrostatiques porteurs de charge du côté du support dirigé vers un rouleau conjugué, chaque élément d'appui pouvant être chargé par au moins un transmetteur de pression (14, 15) pouvant être alimenté par un liquide sous pression, le système comportant au moins une chambre d'appui (19, 25) reliée par l'intermédiaire d'un étranglement (18, 24) à la chambre sous pression (16, 22) du transmetteur de pression (14, 15) et chargeant le bandage de rouleau (4) au moins par une composante de force dirigée en sens inverse de la charge, comportant un dispositif de réglage de pression permettant de régler individuellement ou par groupes la pression affectée à chaque transmetteur de pression, comportant un dispositif de réglage de la température (53, 55, 56, 57, 58) par lequel de la chaleur est fournie ou prélevée au liquide sous pression et comportant un dispositif de réglage de quantité de chaleur qui peut agir sur la quantité de chaleur échangée entre le liquide sous pression et le bandage de rouleau (4), caractérisé en ce qu'en plus des éléments d'appui primaires (5) portant la charge, il est prévu de façon en soi connue des éléments d'appui secondaires (6) décalés d'un angle déterminé en direction périphérique, ces éléments chargeant le bandage de rouleau (4) au moins avec une composante de force dans la direction de la charge, en ce que le dispositif de réglage de quantité de chaleur est constitué par le dispositif de réglage de pression (44a, 44b ; 144a à 144d) et agit par des variations de pression sur le flux volumétrique du liquide sous pression et en ce qu'un compensateur (56) est associé au dispositif de réglage de pression et répartit ces variations de pression entre les éléments d'appui primaires et secondaires de manière que les variations de charge du bandage de rouleau soient sensiblement égales dans le sens de la charge et en sens inverse.

2. Système de rouleau selon la revendication 1, caractérisé en ce que les éléments d'appui primaires et secondaires (5, 6) sont respectivement munis d'au moins deux transmetteurs de pression (14, 15 ; 26, 27) décalés en direction périphérique, de sorte qu'ils chargent le bandage de rouleau (4) aussi avec une composante de force perpendiculaire au plan de charge, et en ce que le comparateur (56) répartit les variations de pression, requises pour faire varier le flux volumétrique, entre les transmetteurs de pression des éléments d'appui primaires et secondaires de manière que les variations de la charge du bandage de rouleau perpendiculairement au plan de charge soient sensiblement les mêmes dans les deux sens.

3. Système de rouleau selon la revendication ou 2, caractérisé en ce que les éléments d'appui secondaires (6) sont disposés à chaque fois dans le même plan de section transversale du rouleau que les éléments d'appui primaires (5).

4. Système de rouleau selon les revendications 2 et 3, caractérisé en ce qu'un élément d'appui primaire (5) et un élément d'appui secondaire (6) sont à chaque fois diamétralement opposés, ces éléments d'appui comportant deux transmetteurs de pression (14, 15 ; 26, 27) disposés symétriquement par rapport au plan de charge.

5. Système de rouleau selon l'une des revendications 1 à 4, caractérisé en ce que tous les éléments d'appui secondaires (6) sont raccordés à la même conduite d'amenée sous pression (L7).

6. Système de rouleau selon l'une des revendications 1 à 5, caractérisé en ce que les éléments d'appui secondaires (6) sont réunis par zones et les éléments d'appui de chaque zone sont raccordés à une conduite sous pression commune (L8 à L11).

7. Système de rouleau selon l'une des revendications 1 à 6, caractérisé en ce que la résistance d'étranglement des étranglements (32, 33) des éléments d'appui secondaires (6) est inférieure à celle des éléments d'appui primaires (5).

8. Système de rouleau selon la revendication 7, caractérisé en ce que les étranglements (32, 33) des éléments d'appui secondaires (6) sont déterminés de manière qu'en service, le flux volumétrique associé à ces éléments d'appui soit au moins égal à 1,5 fois, et de préférence supérieur à deux fois, le flux volumétrique associé aux éléments d'appui primaires (5).

9. Système de rouleau selon la revendication 7 ou 8, caractérisé en ce que les étranglements, constitués sous forme de conduits d'étranglement (32, 33) des éléments d'appui secondaires (6) ont une section transversale supérieure à celle des éléments d'appui primaires (5).

10. Système de rouleau selon l'une des revendications 1 à 9, caractérisé par un dispositif de réglage de la température du rouleau comportant un capteur de valeur réelle (53) qui détermine la température sur l'étendue du rouleau, un capteur de valeur de consigne (58) qui fixe un profil de température sur l'étendue du rouleau, le compensateur (56) et le dispositif de réglage de pression (44a, 44b ; 144a à 144d).

11. Système de rouleau comportant un dispositif d'ajustage de pression agissant sur le dispositif de réglage de pression selon la revendication 10, caractérisé en ce que le dispositif d'ajustage de pression comporte un ordinateur (45 ; 145) pour déterminer la pression à affecter à chaque transmetteur de pression (14, 15; 26, 27), cet ordinateur constituant aussi le compensateur (56).

12. Système de rouleau comportant une pompe à liquide sous pression qui alimente le dispositif de réglage de pression, selon l'une des revendications 1 à 11, caractérisé en ce qu'une pompe d'élévation de pression (160a, b) est montée devant la partie (144a, b) du dispositif de réglage de pression associée aux éléments d'appui primaires (5).

Fig.1

0 201 783

Fig.2

Fig.3

Fig.4

Fig.5

Fig.6

0 201 783